# EUROPEAN PATENT APPLICATION

(11) **EP 3 373 605 A1**
(43) Date of publication of application: **12.09.2018**
(21) Application number: 16861326.3
(22) Date of filing: 08.07.2016
(51) Int. Cl.: H04W 4/00, H04W 4/40, H04W 4/44, H04W 4/46, H04W 4/50, H04W 4/20, H04W 4/06, H04W 76/40, H04W 72/04, H04W 72/08, H04W 72/10, H04W 92/10, H04W 88/08, H04W 88/02

(54) **SERVICE FORWARDING METHOD AND APPARATUS**

(30) Priority: 02.11.2015 CN 201510733162
(71) Applicant: ZTE Corporation, Shenzhen, Guangdong 518057 (CN)
(72) Inventor: XU, Hui, Shenzhen Guangdong 518057 (CN); MA, Zijiang, Shenzhen Guangdong 518057 (CN); LU, Chen, Shenzhen Guangdong 518057 (CN); XIE, Yutang, Shenzhen Guangdong 518057 (CN)
(74) Representative: Studio Torta S.p.A.
(86) International application number: PCT/CN2016/089454
(87) International publication number: WO 2017/076056

(57) **Abstract**

A service forwarding method comprises: a base station eNB receives a request message sent by a vehicle onboard unit OBU and used for indicating the forwarding of a vehicle network V2X service; in response to the request message, the eNB sends to the OBU a forwarding strategy used for indicating the forwarding of a designated V2X service by means of a Uu interface; or the eNB sends to the OBU a forwarding strategy used for indicating the forwarding of a designated V2X service by means of a Uu interface; the eNB receives the designated V2X service sent by the OBU according to the forwarding strategy, and determines the target forwarding area for the V2X service; and the eNB forwards the designated V2X service to the target forwarding area.

## Description

### TECHNICAL FIELD

The present application relates to but not limited to the field of communications, and in particular, to a service forwarding method and apparatus.

### BACKGROUND

With a communication-based collision warning system, by using advanced wireless communication technologies and a new generation of information processing technology, it can realize real-time information interaction between vehicles and vehicles, vehicles and roadside infrastructure, such as informing each other of the current state (including a position, speed, acceleration, and a driving path of the vehicle) and known road environment information, collaboratively perceiving road hazard conditions, and providing various collision warning information in a timely manner to prevent the occurrence of road traffic safety accidents. The communication-based collision warning system has become new concept in attempt to solve road traffic safety problems in many countries.

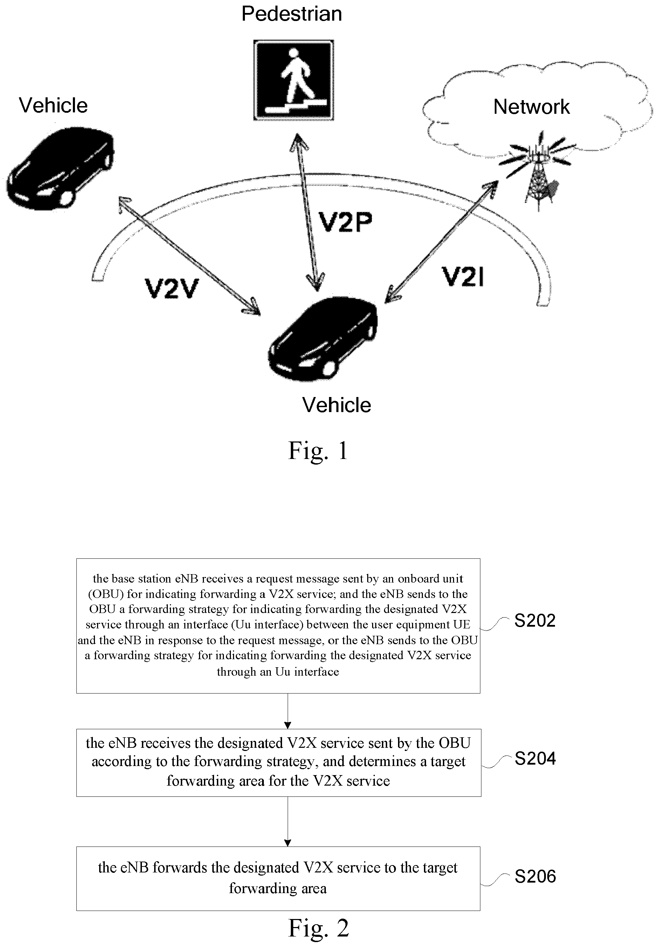

Vehicle to Everything (V2X) refers to providing vehicle information through a sensor, an on-board terminal, and an electronic tag mounted on a vehicle, by utilizing various communication technologies, to realize communication of vehicle to vehicle (V2V), vehicle to pedestrian (V2P), vehicle to infrastructure (V2I), information extraction, sharing and other effective utilization of information on an information network platform, effective control and comprehensive service for the vehicle. Fig. 1 is a schematic diagram of sending traffic and scheduling information to a vehicle through a network information platform in the related art.

The Roadside Unit (RSU) can receive a vehicle request to ensure that the vehicle has access to the Internet and has a gateway function. In addition, it also has data computation, storage, and forwarding capabilities.

Currently, the technologies for implementing V2X include Dedicated Short Range Communication (DSRC) and Long Time Evolution (LTE). DSRC is based on the Institute of Electrical and Electronics Engineers, referred to as IEEE 802.11P and IEEE 1609 series standards. The 802.IIP is responsible for the physical layer and medium access control (MAC) technology, and 1609 is responsible for upper-layer specifications. The LTE-based V2X technology has just come into discussion without a standard formed.

Currently, the 3rd Generation Partnership Project (3GPP) is discussing that the LTE V2X technology includes: an RSU which can be implemented by a stationary user equipment (UE) or a base station (eNB), V2V/V2I which may be implemented through a PC5 interface or an Uu interface. The PC5 interface refers to a device-to-device (D2D) air interface, and the Uu interface refers to an air interface between a UE and an eNB.

In order to effectively use mobile network resources, 3GPP proposes a Multimedia Broadcast Multicast Service (MBMS). This service is a technology that transfers data from one data source to multiple target mobile terminals and implements sharing of network (including the core network and the access network) resources, which can improve the utilization of network resources (especially the air interface resources). It is proposed a research topic of a single-cell MBMS in an Advanced Long Time Evolution (LTE-A) of 3GPP Release 13 (R13), in which a single-cell MBMS service is transmitted over a physical downlink shared channel (PDSCH).

However, there is currently no effective solution to the problem that it is difficult to forward a V2X service through the Uu interface in the related art.

### SUMMARY

The following is an overview of the topics detailed in this article. This summary is not intended to limit the scope of the claims.

This document provides a service forwarding method and apparatus to at least solve the problem in the related art that it is difficult to forward V2X services through the Uu interface.

An embodiment of the present disclosure provides a service forwarding method, including:
receiving, by a base station eNB, a request message sent by an onboard unit OBU for indicating forwarding a Vehicle to Everything V2X service;
sending, by the eNB, to the OBU a forwarding strategy for indicating forwarding the designated V2X service through an Uu interface in response to the request message; or
sending, by the eNB, to the OBU a forwarding strategy for indicating forwarding the designated V2X service through an Uu interface;
receiving, by the eNB, the designated V2X service sent by the OBU according to the forwarding strategy, and determining a target forwarding area for the V2X service; and
forwarding, by the eNB, the designated V2X service to the target forwarding area.

Optionally, the request message includes at least one of: a data size of the V2X service, a time period for forwarding the V2X service, a probability of forwarding the V2X service, and a frequency or a period for sending the V2X service, an identifier of the OBU for forwarding the V2X service, a priority level of the V2X service, and a reason for the OBU to forward the V2X service.

Optionally, the target forwarding area includes: the cell in which the OBU is located, or the cell in which the OBU is located and the neighboring cell.

Optionally, the eNB determining a mode for forwarding the designated V2X service by:
selecting, by the eNB, a forwarding mode according to a V2X service attribute and a local strategy, wherein the forwarding mode includes at least one of: single Cell-Point to Multi-point SC-PTM, System Information Block SIB, a paging message, Multicast Broadcast Single Frequency Network MBSFN, Public Warning System PWS, and Unicast.

Optionally, sending, by the eNB, to the OBU a forwarding strategy for indicating forwarding the designated V2X service through an Uu interface in response to the request message, including:
determining, by the eNB, a factor of the forwarding strategy, wherein the factor includes at least one of: a V2X service attribute, an operator strategy, a Uu interface load, and a local load of the eNB; and
determining, by the eNB, the forwarding strategy for indicating forwarding the designated V2X service through the Uu interface according to the factor, wherein the forwarding strategy carries a type of the designated V2X service.

Optionally, the type of the V2X service includes at least one of: a periodic V2X service, an event-triggered V2X service, and a basic security message.

Optionally, before the eNB receives the designated V2X service sent by the OBU according to the forwarding strategy, the method further includes:
configuring, by the eNB resources to upload a V2X service through the Uu interface.

An embodiment of the present disclosure also provides a service forwarding method, including:
sending, by an onboard unit OBU, to a base station eNB a request message for indicating forwarding a Vehicle to Everything V2X service;
receiving, by the OBU, a forwarding strategy sent by the eNB for indicating forwarding the designated V2X service through the Uu interface; and
sending, bythe OBU, the designated V2X service to the eNB according to the forwarding strategy, so that the eNB can forward the designated V2X service to a target forwarding area.

Optionally, the request message includes at least one of: a data size of the V2X service, a time period for forwarding the V2X service, a probability of forwarding the V2X service, and a frequency or a period for sending the V2X service, an identifier of the OBU for forwarding the V2X service, a priority level of the V2X service, and a reason for the OBU to forward the V2X service.

An embodiment of the present disclosure further provides a computer-readable storage medium, storing computer-executable instructions, and implementing the above service forwarding method when the computer-executable instructions are executed.

An embodiment of the present disclosure also provides a service forwarding apparatus, applied to a base station eNB side, including:
a first receiving module configured to receive a request message sent by an onboard unit OBU for indicating forwarding a Vehicle to Everything V2X service; a first sending module configured to send to the OBU a forwarding strategy for indicating forwarding the designated V2X service through an Uu interface in response to the request message; and/or a second sending module configured to send to the OBU a forwarding strategy for indicating forwarding the designated V2X service through an Uu interface;
a processing module configured to receive the designated V2X service sent by the OBU according to the forwarding strategy, and determine a target forwarding area for the V2X service; and
a first forwarding module configured to forward the designated V2X service to the target forwarding area.

Optionally, the request message includes at least one of: a data size of the V2X service, a time period for forwarding the V2X service, a probability of forwarding the V2X service, and a frequency or a period for sending the V2X service, an identifier of the OBU for forwarding the V2X service, a priority level of the V2X service, and a reason for the OBU to forward the V2X service.

Optionally, the target forwarding area includes: the cell in which the OBU is located, or the cell in which the OBU is located and the neighboring cell.

Optionally, a mode for forwarding the designated V2X service is determined by:
selecting a forwarding mode according to a V2X service attribute and a local strategy, wherein the forwarding mode includes at least one of: single Cell-Point to Multi-point SC-PTM, System Information Block SIB, a paging message, Multicast Broadcast Single Frequency Network MBSFN, Public Warning System PWS, and Unicast.

Optionally, the first sending module includes:
an obtaining unit configured to determine a factor of the forwarding strategy, wherein the factor includes at least one of: a V2X service attribute, an operator strategy, a Uu interface load, and a local load of the eNB; and
a sending unit configured to determine the forwarding strategy for indicating forwarding the designated V2X service through the Uu interface according to the factor, wherein the forwarding strategy carries a type of the designated V2X service.

Optionally, the type of the V2X service includes at least one of: a periodic V2X service, an event-triggered V2X service, and a basic security message.

Optionally, before the eNB receives the designated V2X service sent by the OBU according to the forwarding strategy, the apparatus further includes:
a configuring module configured to configure resources to upload a V2X service through the Uu interface.

An embodiment of the present disclosure further provides a service forwarding apparatus includes:
a third sending module configured to send to a base station eNB a request message for indicating forwarding a Vehicle to Everything V2X service;
a second receiving module configured to receive a forwarding strategy sent by the eNB for indicating forwarding the designated V2X service through the Uu interface; and
a second forwarding module configured to send the designated V2X service to the eNB according to the forwarding strategy, so that the eNB can forward the designated V2X service to a target forwarding area.

Optionally, the request message includes at least one of: a data size of the V2X service, a time period for forwarding the V2X service, a probability of forwarding the V2X service, and a frequency or a period for sending the V2X service, an identifier of the OBU for forwarding the V2X service, a priority level of the V2X service, and a reason for the OBU to forward the V2X service.

In this embodiment of the present disclosure, after receiving the request message sent by the onboard unit OBU for indicating forwarding V2X service, the eNB, in response to the request message, may send to the OBU a forwarding strategy for indicating forwarding the designated V2X service through the Uu interface; or the eNB sends to the OBU a forwarding strategy for indicating forwarding the designated V2X service through an Uu interface.

Through the forwarding strategy, the eNB receives the designated V2X service sent by the OBU according to the forwarding strategy and determines the target forwarding area for the V2X service and forwards the designated V2X service to the target forwarding area. That is, in this embodiment, the eNB sends a forwarding policy for forwarding the V2X service according to the OBU request or proactively through the Uu interface, so that the OBU can forward the V2X service according to the forwarding policy. Then, the eNB forwards the V2X service. Thus, it can solve the problem that it is difficult to forward a V2X service through the Uu interface in the related art.

Other aspects can be understood after reading and understanding the drawings and detailed description.

### BRIEF DESCRIPTION OF DRAWINGS

Fig. 1 is a schematic diagram of sending traffic and scheduling information to a vehicle through a network information platform in the related art;
Fig. 2 is a flowchart of a service forwarding method according to an embodiment of the present disclosure;
Fig. 3 is a flowchart of another service forwarding method according to an embodiment of the present disclosure;
Fig. 4 is a block diagram of a service forwarding apparatus according to an embodiment of the present disclosure;
Fig. 5 is a block diagram of an optional service forwarding apparatus according to an embodiment of the present disclosure;
Fig. 6 is a block diagram of another service forwarding apparatus according to an embodiment of the present disclosure;
Fig. 7 is a schematic diagram of a source OBU and a target OBU located within coverage of one base station eNB according to an embodiment of the present disclosure;
Fig. 8 is a schematic diagram of a source OBU and a target OBU located in different eNBs according to an embodiment of the present disclosure;
Fig. 9 is a schematic diagram of a source OBU located outside coverage of an eNB according to an embodiment of the present disclosure;
Fig. 10 is a flowchart of a method for forwarding a V2X service according to an alternative embodiment of the present disclosure;
Fig. 11 is a flowchart of another method for forwarding a V2X service according to an alternative embodiment of the present disclosure;
Fig. 12 is a flow chart of another method for forwarding a V2X service according to an alternative embodiment of the present disclosure;
Fig. 13 is a flow chart of another method for forwarding a V2X service according to an alternative embodiment of the present disclosure;
Fig. 14 is a flowchart of another method for forwarding a V2X service according to an alternative embodiment of the present disclosure;
Fig. 15 is a block diagram of an apparatus for forwarding a V2X service according to an alternative embodiment of the present disclosure;
Fig. 16 is a block diagram of another apparatus for forwarding a V2X service according to an alternative embodiment of the present disclosure.

### DETAILED DESCRIPTION

The embodiments of the present disclosure will be described below with reference to the accompanying drawings. It should be noted that the embodiments in the present application and the various modes in the embodiments can be combined with each other without conflict.

It should be noted that the terms "first", "second", and the like in this document are used to distinguish similar objects and do not have to be used to describe a specific order or sequence.

In this embodiment, a service forwarding method is provided. Fig. 2 is a flowchart of a service forwarding method according to an embodiment of the present disclosure. As shown in Fig. 2, the method includes the following steps.

In step S202, the base station eNB receives a request message sent by an onboard unit (OBU) for indicating forwarding a V2X service; and the eNB sends to the OBU a forwarding strategy for indicating forwarding the designated V2X service through an interface (Uu interface) between the user equipment UE and the eNB in response to the request message, or the eNB sends to the OBU a forwarding strategy for indicating forwarding the designated V2X service through an Uu interface.

In step S204, the eNB receives the designated V2X service sent by the OBU according to the forwarding strategy, and determines a target forwarding area for the V2X service.

In step S206, the eNB forwards the designated V2X service to the target forwarding area.

Through step S202 to step S206 in this embodiment, the eNB, after receiving the request message sent by the onboard unit OBU for indicating forwarding the V2X service, sends to the OBU a forwarding strategy for indicating forwarding the designated V2X service through an Uu interface in response to the request message, or the eNB sends to the OBU a forwarding strategy for indicating forwarding the designated V2X service through an Uu interface. The eNB receives the designated V2X service sent by the OBU according to the forwarding strategy, determines a target forwarding area for the V2X service, and forwards the designated V2X service to the target forwarding area. That is, in this embodiment, the eNB sends a forwarding strategy for forwarding the V2X service according to the OBU request or proactively through the Uu interface, so that the OBU can forward the V2X service according to the forwarding strategy. Then, the eNB forwards the V2X service to the target forwarding area. Thus, it can solve the problem that it is difficult to forward a V2X service through the Uu interface in the related art.

The step S202 to step S204 in this embodiment will be described in detail below in conjunction with optional implementations of this embodiment.

Optionally, the forwarding area involved in this embodiment may include: the cell in which the OBU is located, or the cell in which the OBU is located and the neighboring cell. In an optional implementation of this embodiment, the eNB may determine the manner of forwarding the designated V2X service in the following manner: the eNB selects the forwarding mode according to the attribute of the V2X service and the local strategy. The forwarding mode includes at least one of: single Cell-Point to Multi-point (SC-PTM), System Information Block (SIB), a paging message, Multicast Broadcast Single Frequency Network (MBSFN), Public Warning System (PWS), and Unicast.

The eNB sending to the OBU a forwarding strategy for indicating forwarding the designated V2X service through an Uu interface in response to the request message in step S202 of this embodiment, may be implemented as follows.

In step S202-1, the eNB determines a factor of the forwarding strategy. The factor may include at least one of the following: a V2X service attribute, an operator strategy, a Uu interface load, and a local load of the eNB.

In step S202-2, the eNB determines a forwarding strategy for indicating forwarding of the designated V2X service through the Uu interface according to the factor. The forwarding strategy carries the type of the designated V2X service. The type of the V2X service may include at least one of the following: periodic V2X service, event-trigerred V2X service, and basic security message.

In an optional implementation of this embodiment, the forwarding strategy may also carry one of the following: a data size of the V2X service to be forwarded, a time period for forwarding the V2X service, a probability of forwarding the V2X service, and a frequency or a period for sending the V2X service, the identifier of the OBU for forwarding the V2X service, and a priority level of the V2X service.

It can be noted that, the data size of the V2X service may refer to that the V2X service that conforms to the size (i.e. the data size) indicated in the forwarding criterion (corresponding to the forwarding strategy) may be forwarded through the Uu interface. The time period may refer to the time period within which the service may be forwarded through the Uu interface. The probability may refer to a value between (0, 1) randomly selected by the OBU that needs to forward the V2X service; if the value is not greater than the probability (that is, the probability) in the criterion, the OBU may forward the V2X service through the Uu interface. The transmission frequency or period may refer to the transmission frequency or period of the V2X service through the Uu interface. The OBU identifier may refer to an OBU that can use the Uu interface to forward the V2X service. The priority level may refer to that a V2X service that is not lower than the priority may be forwarded through the Uu interface. The priority level can be indicated with a Quality of Service (QoS) class identifier (QCI).

In step S204 of this embodiment, before the eNB receives the designated V2X service sent by the OBU according to the forwarding strategy, the method of this embodiment may further include the following step.

The eNB configures the resources for uploading V2X services through the Uu interface. The resource may include time frequency location, power configuration, and the like. That is, the eNB may blindly check the V2X service data in the resource, and the eNB may first determine that the received data is a V2X service that needs to be forwarded.

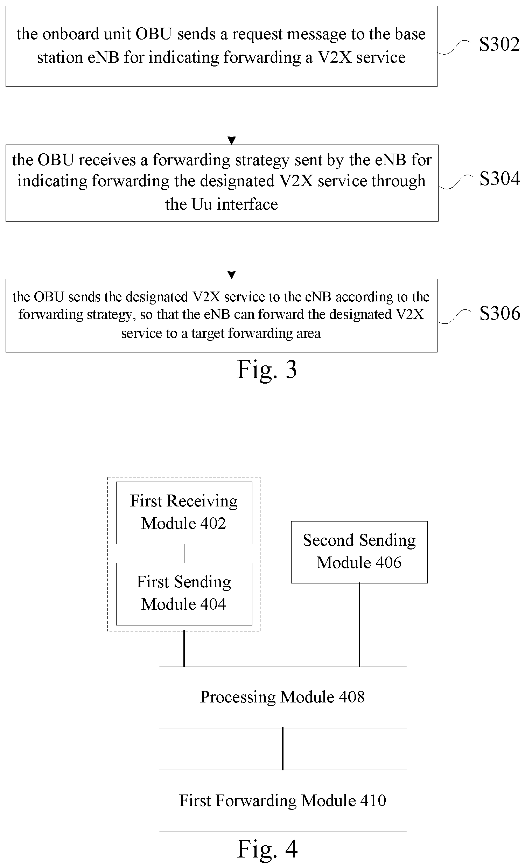

Fig. 3 is a flowchart of another service forwarding method according to an embodiment of the present disclosure. As shown in Fig. 3, the method includes the following steps.

In step S302, the onboard unit OBU sends a request message to the base station eNB for indicating forwarding a V2X service.

In step S304, the OBU receives a forwarding strategy sent by the eNB for indicating forwarding the designated V2X service through the Uu interface.

In step S306, the OBU sends the designated V2X service to the eNB according to the forwarding strategy, so that the eNB can forward the designated V2X service to a target forwarding area.

Optionally, the request message includes at least one of the following: a data size of the V2X service to be forwarded, a time period for forwarding the V2X service, a probability of forwarding the V2X service, and a frequency or a period for sending the V2X service, the identifier of the OBU for forwarding the V2X service and an identifier of the V2X service, a priority level of the V2X service, and a reason for the OBU to forward the V2X service.

Through the description of the above embodiments, those skilled in the art could clearly understand that the method according to the above embodiments can be implemented by means of software in combination with a necessary general hardware platform, and of course can also be implemented by means of hardware. Based on such understanding, the technical solution of the embodiment of the present disclosure essentially or the part that contributes to the related art can be embodied in the form of a software product stored in a storage medium (such as ROM/RAM, disk) including instructions for enabling a terminal device (which may be a mobile phone, a computer, a server, or a network device, etc.) to perform the method described in the embodiments of the present disclosure.

In this embodiment, a service forwarding apparatus is further provided, which is applied to the eNB side and the OBU side. The apparatus is configured to implement the foregoing embodiment and optional implementations, and the description thereof has already been made and will not be repeated. As used below, the term "module" may implement a combination of software and/or hardware of a predetermined function. Although the apparatus described in the following embodiments may be implemented in software, implementation of hardware or a combination of software and hardware is also possible and conceived.

Fig. 4 is a block diagram of a service forwarding apparatus according to an embodiment of the present disclosure. The apparatus is applied to an eNB side. As shown in Fig. 4, the apparatus includes: a first receiving module 402 configured to receive a request message sent by an onboard unit (OBU) for indicating forwarding a V2X service; a first sending module 404 coupled to the receiving module 402 and configured to send to the OBU a forwarding strategy for indicating forwarding the designated V2X service through an Uu interface in response to the request message; and/or a second sending module 406 configured to send to the OBU a forwarding strategy for indicating forwarding the designated V2X service through an Uu interface;
a processing module 408 coupled to the first sending module 404 and/or the second sending module 406 and configured to receive the designated V2X service sent by the OBU according to the forwarding strategy, and determine a target forwarding area for the V2X service;
a first forwarding module 410 coupled to the processing module 408 and configured to forward the designated V2X service to the target forwarding area.

Optionally, the forwarding area involved in this embodiment may include at least one of: the cell in which the OBU is located, or the cell in which the OBU is located and the neighboring cell. In an optional implementation of this embodiment, the eNB may determine the manner of forwarding the designated V2X service in the following manner: the eNB selects the forwarding mode according to the attribute of the V2X service and the local strategy. The forwarding mode includes at least one of: single Cell-Point to Multi-point (SC-PTM), System Information Block (SIB), a paging message, Multicast Broadcast Single Frequency Network (MBSFN), Public Warning System (PWS), and Unicast.

Optionally, the first sending module 404 includes: an obtaining unit configured to determine a factor of the forwarding strategy, the factor may including at least one of the following: a V2X service attribute, an operator strategy, a Uu interface load, and a local load of the eNB; a sending unit configured to determine a forwarding strategy for indicating forwarding of the designated V2X service through the Uu interface according to the factor. The forwarding strategy carries the type of the designated V2X service. The type of the V2X service may include at least one of the following: periodic V2X service, event-trigerred V2X service, and basic security message.

In an optional implementation of this embodiment, the forwarding strategy may also carry one of the following: a data size of the V2X service to be forwarded, a time period for forwarding the V2X service, a probability of forwarding the V2X service, and a frequency or a period for sending the V2X service, the identifier of the OBU for forwarding the V2X service, and a priority level of the V2X service.

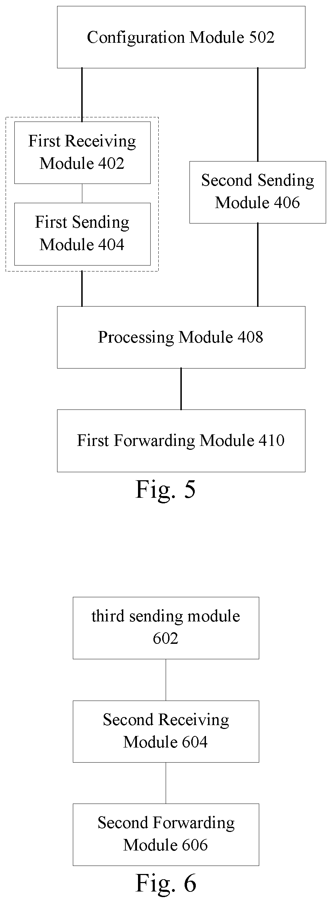

Fig. 5 is a block diagram of an optional service forwarding apparatus according to an embodiment of the present disclosure, which may be an optional block diagram of Fig. 4. As shown in Fig. 5, before receiving the designated V2X service sent by the OBU according to the forwarding strategy, the apparatus may further include:
a configuration module 502 coupled to the first receiving module 402 and/or the second sending module 406 and configured to configure the resources for uploading V2X services through the Uu interface.

Fig. 6 is a block diagram of another service forwarding apparatus according to an embodiment of the present disclosure. The apparatus is applicable to an OBU side. The apparatus includes: a third sending module 602 configured to send a request message to the base station eNB for indicating forwarding a V2X service; a second receiving module 604 coupled to the second sending module 602 and configured to receive a forwarding strategy sent by the eNB for indicating forwarding the designated V2X service through the Uu interface; and a second forwarding module 606 coupled to the second receiving module 604 and configured to send the designated V2X service to the eNB according to the forwarding strategy, so that the eNB can forward the designated V2X service to a target forwarding area.

Optionally, the request message includes at least one of the following: a data size of the V2X service to be forwarded, a time period for forwarding the V2X service, a probability of forwarding the V2X service, and a frequency or a period for sending the V2X service, the identifier of the OBU for forwarding the V2X service and an identifier of the V2X service, a priority level of the V2X service, and a reason for the OBU to forward the V2X service.

It may be noted that the above modules may be implemented by software or hardware, and the latter may be implemented in the following manner, but it is not limited thereto: the above modules are all located in the same processor; or the above modules are respectively located in multiple processors..

The following describes the embodiments of the present disclosure in conjunction with alternative embodiments of the present disclosure;

This alternative embodiment provides a method for forwarding a V2X service. The method includes: an onboard unit OBU receives a criterion for forwarding a V2X service through a Uu interface or an OBU sends a request message for forwarding a V2X service to an eNB; the OBU sends a V2X service to the base station according to the indication of the eNB, and the base station receiving the V2X service forwards the V2X service in an active areal; the interested OBU in the active area detects and receives the required V2X service.

The following describes the alternative embodiment in detail in conjunction with different scenarios.

### Scenario 1:

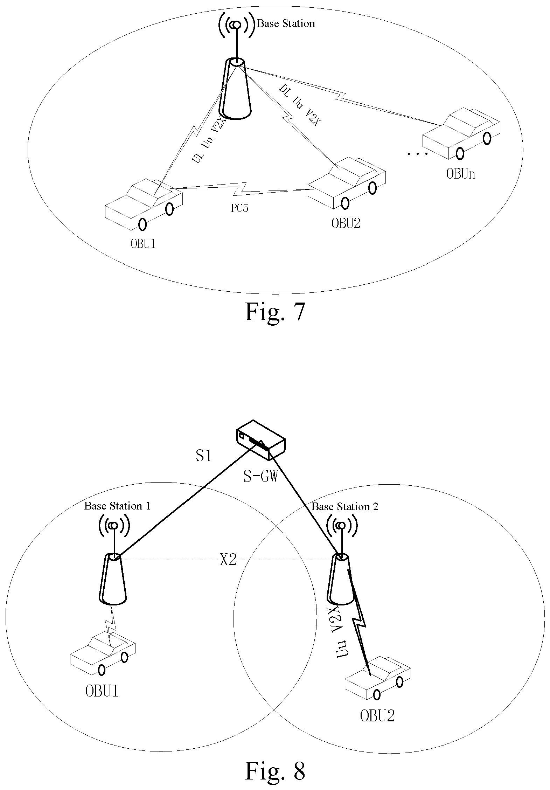

Fig. 7 is a schematic diagram of a source OBU and a target OBU located in coverage of one base station eNB according to an embodiment of the present disclosure, and the following is described with reference to Fig. 7.

### 1. The OBU receives the V2X forwarding criteria (corresponding to the forwarding strategy in the above embodiment).

1.1) It is possible that the eNB sends periodically the forwarding criteria to the OBU through the Uu interface, or the OBU receives the forwarding criteria through non-access stratum NAS signaling or application layer signaling.

The forwarding criteria can be used to indicate to the OBU which V2X services can be forwarded through the Uu interface, and the eNB can determine the forwarding criteria according to at least one of the following: an operator strategy, a Uu interface load, and a local load. The criteria can be transmitted via RRC signaling. The criterion information may at least include a V2X service type. The V2X service type refers to at least one of the following: periodic V2X services, event triggered V2X services, and basic security messages.

The criterion information may also include: size of the V2X service, time period, probability, transmission frequency or period, OBU identification, priority level, etc. The size of the V2X service may refer to that the V2X service that conforms to the size indicated in the forwarding criterion may be forwarded through the Uu interface. The time period may refer to the time period within which the service may be forwarded through the Uu interface. The probability may refer to a value between (0, 1) randomly selected by the OBU that needs .to forward the V2X service; if the value is not greater than the probability in the criterion, the OBU may forward the V2X service through the Uu interface. The transmission frequency or period may refer to the transmission frequency or period of the V2X service through the Uu interface. The OBU identifier may refer to an OBU that can use the Uu interface to forward the V2X service. The priority level may refer to that a V2X service that is not lower than the priority may be forwarded through the Uu interface. The priority level can be indicated with a QoS class identifier (QCI).

Optionally, the eNB sets a resource pool used for forwarding through the Uu interface. The resource pool may be indicated in the criterion information or may be separately indicated. The resource pool may be used by the OBU to upload the V2X service to the eNB, and may include time-frequency location, power configuration, and the like. The V2X service in this alternative embodiment may include at least one of the following: V2V, V2I, V2P and V2N.

1.2) If the eNB does not indicate forwarding criteria (such as indicating forwarding criteria through NAS signaling or application layer signaling) or the OBU does not comply with forwarding criteria or the forwarding criteria does not include resource configuration information (such as a resource pool), the OBU may send a forwarding request to the eNB.

The forwarding request may be transmitted through Radio Resource Control (RRC) signaling, and the forwarding request may include: an OBU identifier and/or a V2X service identifier; and may further include: reason, time period, V2X data size, and V2X data. transmission frequency or period, V2X service priority, and V2X service delay. The reason is used to indicate the reason why the OBU request the forwarding. The time period, data size and transmission frequency are the same as above. The V2X service priority refers to the priority identifier, such as the QoS Class Identifier (QCI). The V2X service delay refers to the delay requirements of the V2X service.

The eNB may receive the forwarding request message from the OBU, and the eNB may determine whether to accept the request. If so, the eNB may send a success indication response to the OBU. Otherwise, the eNB may send a failure indication response to the OBU.

The eNB may determine whether to accept the request according to at least one of the following: operator strategy, Uu interface load and local load. If the operator strategy allows forwarding and/or the Uu interface and the eNB local load allow forwarding, the eNB may send a success response message. The response message sent by the eNB may be transmitted through RRC signaling.

Optionally, the eNB allocates a Uu interface upload resource for the V2X service according to the OBU request message, and sends the resource configuration information of the upload resource to the OBU. The resource configuration information may be sent via L1/L2 layer or RRC layer signaling.

### 2. The OBU uploads V2X service data through the Uu interface.

The OBU may upload the V2X service through the Uu interface according to the forwarding criteria of the eNB or the response message of the eNB. The V2X service may refer to a V2X service that is allowed to be forwarded through the Uu interface.

The OBU may upload the V2X service according to the resources indicated by the eNB or the resources selected in the resource pool. The upload may be performed periodically on the Uu interface at a transmission frequency not greater than that indicated by the eNB.

Optionally, if the event corresponding to the V2X service ends, or the eNB instructs to stop the Uu interface uploading, or the Uu interface upload period ends or expires, the OBU stops uploading the V2X service. Alternatively, the OBU may send an indication information of stop Uu interface forwarding to the eNB before the upload is stopped.

### 3. The eNB determines the way to forward V2X service.

The eNB may receive the V2X service data sent by the OBU on the OBU upload resource. If the OBU does not know about the transmission resource selected by the OBU, the eNB may blindly check the V2X service data in the resource pool. The eNB may first determine that the received data is a V2X service that needs to be forwarded, and the eNB may determine through at least one of the following: a V2X service identifier, a resource location, and a forwarding identifier.

The eNB may select a forwarding mode according to the V2X service attributes and a local strategy. The forwarding mode may include at least one of the following: Single cell point-to-multipoint SC-PTM, system broadcast message SIB, paging message, multicast/multicast single frequency network MBSFN, public warning system PWS, unicast.

### 4. The eNB forwards the V2X service data.

The eNB may determine the forwarding area for the V2X service according to the service attributes and operator strategies. The forwarding area may include: the cell in which the source OBU is located, or the cell in which the source OBU is located and the neighboring cell.

### 5. The target OBU detects and receives the required V2X service.

The source OBU may refer to an OBU that uploads V2X services through the Uu interface. The target OBU may refer to an OBU that receives V2X services through the Uu interface. Scenario 2:
Fig. 8 is a schematic diagram of a source OBU and a target OBU located in different eNBs according to an embodiment of the present disclosure and the following is described with reference to Fig. 7.

### 2.1) X2 interface between eNBs

In addition to the steps in scenario 1, the following steps may also be included: a) the eNB which covers the source OBU determines that the OBUs on the sending side and on the receiving side are located in coverage of different eNBs. b) the source eNB interacts with the eNB which covers the target OBU through the X2 interface. The interaction contents may include: the source eNB requests the target eNB to forward the V2X service through the Uu interface, the target eNB responds to the request of the source eNB, and the V2X service data and resource configuration information are transferred through the X2 interface between the eNBs; and c) finally, the following V2X service data transmission path is formed: source OBU->source eNB->target eNB->target OBU.

### 2.2) No X2 interface available between eNBs

Similar to the scenario in 2.1), the source OBU and the target OBU are located in coverage of different eNBs. The difference lies in that there is no X2 interface available between eNBs. In this case, the eNBs forward the V2X service data through the S-GW, and the control plane signaling is implemented through a mobility management entity (MME). The final V2X service data transmission path is as follows: Source OBU->Source eNB->S-GW->Target eNB->Target OBU.

To ensure the reliability of the V2X service, the OBU can continue to broadcast and send V2X service data on the PC5 while sending the V2X service data to the eNB. The target OBU can receive the required V2X service from Uu or PC5.

The onboard unit OBU may be equivalent to a user equipment UE or an on-board mobile terminal;
The base station forwarding criterion or response message may be sent through a system broadcast message or a dedicated RRC message. The system broadcast message may be an SIB message in a related art (such as a 3GPP specification) with additional corresponding field or a SIB message specifically for V2X.

### Scenario 3:

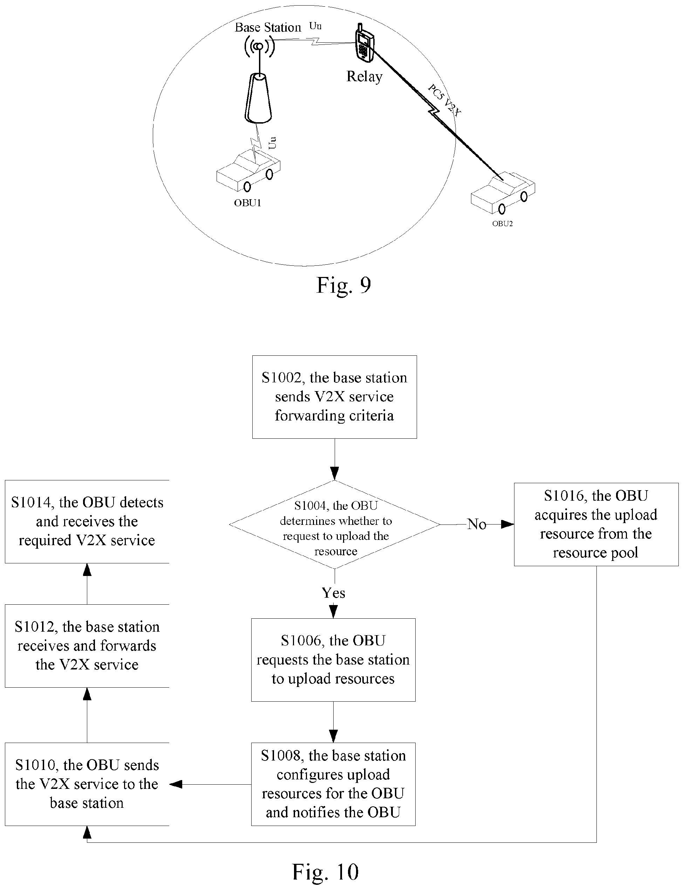

Fig. 9 is a schematic diagram of a source OBU located outside the coverage of an eNB according to an embodiment of the present disclosure, and the following is described with reference to Fig. 9. This scenario is similar to that of scenario 1, and the differences lies in that a OBU2 discovers or selects a UE-to-network (NW) relay, the source OBU2 sends signaling and V2X data to the eNB through the relay, and the eNB sends forwarding criteria, signaling and response messages to the OBU through the relay. The final V2X service data path is: source OBU2->relay->eNB->target OBU (e.g., OBU1).

The following is a detailed description of the alternative embodiments based on the above different scenarios and corresponding examples.

### Example 1

Fig. 10 is a flow chart of a method for forwarding a V2X network service according to an alternative embodiment of the present disclosure. As shown in Fig. 10, the method includes the following steps.

In step S1002, the eNB sends V2X service forwarding criteria.

The eNB may periodically send forwarding criteria through broadcast RRC signaling. The criteria can be updated as needed. If the criteria is updated, the eNB may send the updated criteria through modification period, or indicate the update through paging and notification messages, and send the updated criteria after paging and indication or at the modification period. In addition, the criteria may or may not include: OBU upload resource configuration. The resource configuration can be a resource pool.

In step S1004, the OBU determines whether to request to upload the resource. If the answer is yes, the process goes to step SI006, otherwise the process goes to step S1016.

The OBU may receive the criterion message sent by the eNB, and determine whether the criterion message includes the uplink resource configuration information. If the answer is yes, the OBU may obtain resources from the resource pool to upload the V2X service. Otherwise, the OBU may send a resource request message to the eNB.

In step S1006, the OBU requests the eNB to upload resources.

The OBU may request upload resources from the eNB through RRC signaling or Layer 1 (L1)/Layer 2 (L2) signaling. The request may include V2X service attributes.

In step S1008, the eNB configures upload resources for the OBU and notifies the OBU.

The eNB may configure resources for the V2X service according to request message of the OBU, and the eNB may notify the OBU of the configuration resource. The notification may be transmitted through RRC signaling. The resource configuration may consider: V2X service requirements, such as size, frequency or period, delay, priority, and the like.

In step S1010, the OBU sends the V2X service to the eNB.

The OBU can send the V2X service through the Uu interface, and the V2X service can be repeatedly sent at regular intervals. The OBU can send V2X service data through an Internet Protocol (IP) bearer or a V2X private (non-IP) bearer.

In step S1012, the eNB receives and forwards the V2X service.

The eNB may receive the V2X service sent by the OBU, and may select the forwarding mode and forwarding area according to the V2X service attributes, and/or local load, and/or operator strategies. The forwarding area may include: the cell in which the source OBU is located, or the cell in which the source OBU is located and the neighboring cell.

In step S1014, the OBU detects and receives the required V2X service.

The OBU may include any interested OBU receiving V2X services within the cell covered by an eNB. The OBU may detect the required V2X service according to the eNB indication or the V2X service required for blind detection in the resource pool.

In step S1016, the OBU acquires the upload resource from the resource pool and the process proceeds to step S1010.

The OBU may select resources for uploading the V2X service from the resource pool according to the resource pool information indicated by the eNB.

### Example 2

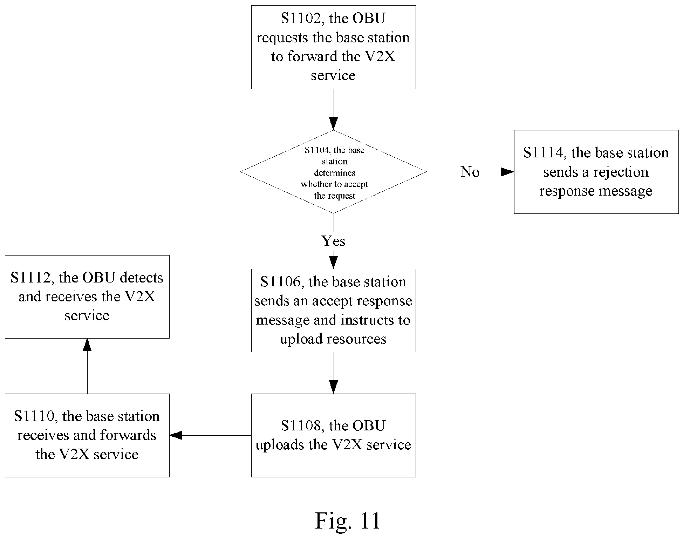

Fig. 11 is a flow chart of another method for forwarding a V2X service to a car network according to an alternative embodiment of the present disclosure. As shown in Fig. 11, the method includes the followings steps.

In step S1102, the OBU requests the eNB to forward the V2X service.

The OBU may request the eNB to forward the V2X service through RRC signaling. The OBU may be in at least one of the following conditions: no criteria is received from the eNB, non-compliance with the criteria, and no criteria is transmitted from the eNB.

In step S1104, the eNB determines whether to accept the request, if the answer is yes, the process goes to step S1106, otherwise the process turns to step S1114.

The eNB can determine whether to accept the request comprehensively according to the attributes of the V2X service, the number of the OBUs sending request, the local load, and the operator's strategy.

In step S1106, the eNB sends an accept response message and instructs to upload resources.

The base station eNB may send an accept response message through RRC signaling, and the eNB may indicate upload resources through RRC signaling or L1/L2 layer signaling. The upload resource may include at least one of the following: a resource pool, a designated resource location.

In step S1108, the OBU uploads the V2X service.

The OBU may upload the V2X service according to the resource configuration information. In step S1110, the eNB receives and forwards the V2X service.

The eNB may determine the forwarding mode and the forwarding area. The forwarding area may include: the cell in which the source OBU is located, or the cell in which the source OBU is located and the neighboring cell.
the cell in which the source OBU is located, or the cell in which the source OBU is located and the neighboring cell.

In step S1112, the OBU detects and receives the V2X service.

In step S1114, the eNB sends a rejection response message.

The eNB may determine to reject the forwarding request message. Correspondingly, the eNB may send a rejection response message through RRC signaling.

### Example three

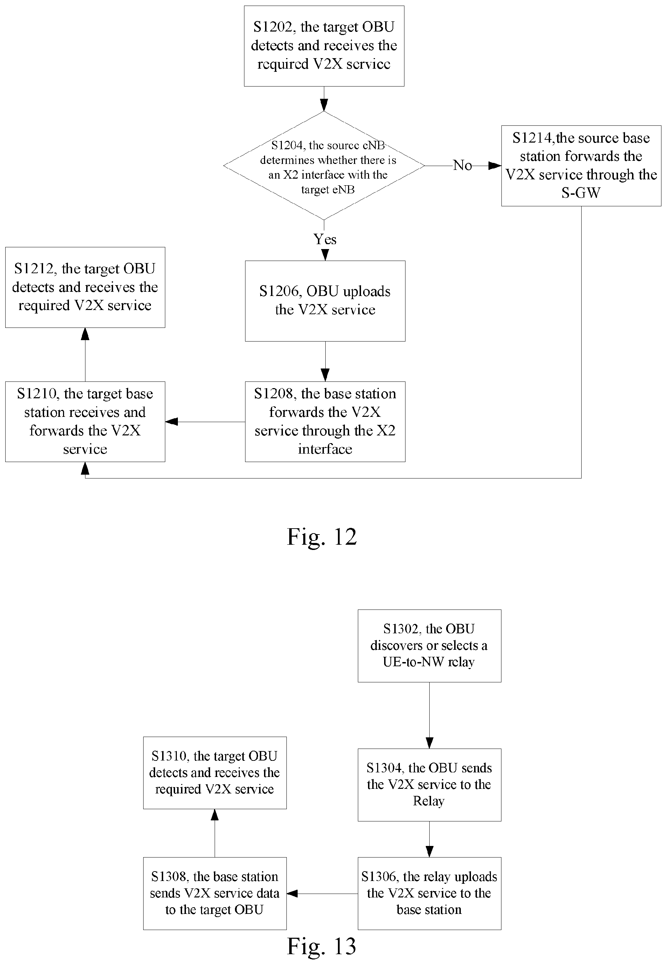

Fig. 12 is a flow chart of another method for forwarding a V2X service according to an alternative embodiment of the present disclosure. As shown in Fig. 12, the method includes the following steps.

In step S1202, the eNB determines that the target OBU is located in a different eNB coverage;
The eNB may determine the position of the OBU in multiple ways, such as: an indication of the source OBU, or an indication of the target OBU, or an indication of other network elements.

In step S1204, the source eNB determines whether there is an X2 interface with the target eNB, if the answer is yes, the process goes to step S1206, otherwise, the process goes to step S1214.

The source eNB may be an eNB which covers the source OBU, and the target eNB may be an eNB which covers the target OBU. The source eNB may determine whether there is an X2 interface (interface between eNBs) with the target eNB according to related technologies (such as 3GPP specifications). If there is no such X2 interface, the source eNB may determine that both of the source eNB and the target eNB S-GW connected with S1 (interface between the eNB and the serving gateway (S-GW)). The X2 interface may refer to the available X2 interface.

In step S1206, OBU uploads the V2X service.

Here, it can be assumed that the OBU has obtained the uploaded resource and sends the V2X service through the uploaded resource.

In step S1208, the eNB forwards the V2X service through the X2 interface.

The eNB may receive the V2X service uploaded by the OBU and forward the V2X service through the X2 interface with the eNB which covers the target OBU. Before the source eNB forwards the V2X service through the X2 interface, the source eNB may also perform signaling interaction with the target eNB through the X2 interface to determine that the target eNB can forward the V2X service.

In step S1210, the target eNB receives and forwards the V2X service.

The target eNB can determine the forwarding mode and the forwarding area.

In step S1212, the target OBU detects and receives the required V2X service.

In step S1214, the source eNB forwards the V2X service through the S-GW and the process proceeds to step S1210.

The source eNB can send the V2X service to the S-GW through the S1-U interface, and the S-GW can forward the V2X service to the target eNB through the S1-U interface. Before the source eNB forwards the V2X service to the S-GW, the source eNB can also perform signaling interaction with the MME through the S1-MME interface to determine that the V2X service can be forwarded through the S-GW.

### Example four

Fig. 13 is a flow chart of another method for forwarding a V2X service according to an alternative embodiment of the present disclosure. As shown in Fig. 13 , the method includes the following steps:
In step S1302, the OBU discovers or selects a UE-to-NW relay.

The OBU can find or select the UE-to-NW relay according to the related technical method. In step SI304, the OBU sends the V2X service to the Relay.

The OBU can send V2X services to the relay through the PC5 interface with the relay.

In step S1306, the relay uploads the V2X service to the eNB.

The relay can forward the V2X service to the eNB through the Uu interface. Before the relay forwards the V2X service, relay may also perform signaling interaction with the eNB to determine that the eNB can forward the V2X service.

In step S1308, the eNB sends V2X service data to the target OBU.

The eNB may determine the forwarding mode and the forwarding area, and forward the V2X service data in the forwarding area.

In step S1310, the target OBU detects and receives the required V2X service.

### Example 5

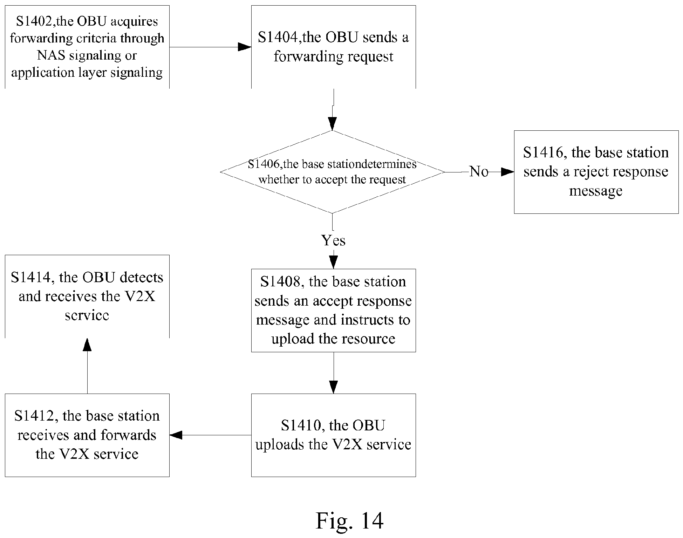

Fig. 14 is a flow chart of another method for forwarding a V2X network service according to an alternative embodiment of the present disclosure. As shown in Fig. 14, the method includes the following steps.

In step S1402, the OBU acquires forwarding criteria through Non-Access-Stratum (NAS) signaling or application layer signaling.

NAS signaling may be indicated by the MME to the OBU, and application layer signaling may be indicated by the application layer entity (e.g., application server) to the OBU.

In step S1404, the OBU sends a forwarding request to the eNB.

In step S1406, the eNB determines whether to accept the request, if the answer is yes, the process goes to step S1408, otherwise, the process goes to step S1416.

The eNB can determine whether to accept the request comprehensively according to the attributes of the V2X service, the number of the requesting OBU, the local load, and the operator's strategy.

In step S1408, the eNB sends an accept response message and instructs to upload the resource.

The base station eNB may send an accept response message through RRC signaling, and the eNB may indicate the upload resource through RRC signaling or L1/L2 layer signaling. The upload resource may include at least one of the following: a resource pool and a designated resource location.

In step S1410, the OBU uploads the V2X service.

The OBU can upload the V2X service according to the resource configuration information.

In step S1412, the eNB receives and forwards the V2X service.

The eNB may determine the forwarding mode and the forwarding area. The forwarding area includes: the cell in which the source OBU is located, or the cell in which the source OBU is located and the neighboring cell.

In step S1414, the OBU detects and receives the V2X service.

In step S1416, the eNB sends a reject response message.

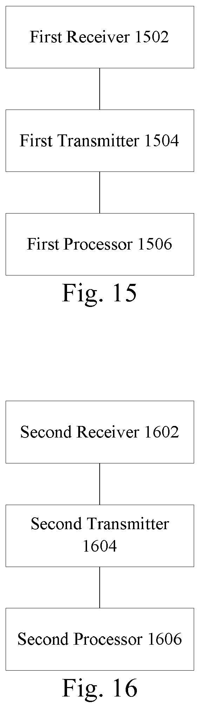

Fig. 15 is a block diagram of an apparatus for forwarding a V2X service according to an alternative embodiment of the present disclosure. As shown in Fig. 15, the apparatus includes a first receiver 1502 configured to receive a request message and V2X service data sent by an OBU; a first transmitter 1504 configured to: forward the V2X service data and V2X service related control information to an OBU or neighboring eNB or S-GW; and a first processor 1506 configured to determine whether to accept the forwarding request and also configured to determine the transmission mode and forwarding area for the V2X. The device may be an LTE base station eNB.

Fig. 16 is a block diagram of an apparatus for forwarding a V2X service according to an alternative embodiment of the present disclosure. As shown in Fig. 16, the apparatus includes: a second receiver 1602 configured to receive a forward request response message sent by a base station and V2X service data and resource configuration information of the V2X service; a second transmitter 1604 configured to send a forwarding request message and V2X service data to the base station; and a second processor 1606 configured to determine a receiving mode of the V2X service and detect the V2X service. The apparatus may include an LTE OBU or DSRC OBU or LTE user equipment UE.

An embodiment of the invention also provides a storage medium. Optionally, in this embodiment, the above storage medium may be configured to store program codes for executing the following steps:
S1: the base station eNB receives a request message sent by an onboard unit (OBU) for indicating forwarding a V2X service; and the eNB sends to the OBU a forwarding strategy for indicating forwarding the designated V2X service through an Uu interface in response to the request message, or the eNB sends to the OBU a forwarding strategy for indicating forwarding the designated V2X service through an Uu interface.
S2: the eNB receives the designated V2X service sent by the OBU according to the forwarding strategy, and determines the target forwarding area for the V2X service;
S3: the eNB forwards the designated V2X service to the target forwarding area.

Optionally, for examples in this embodiment, reference may be made to the examples described in the foregoing embodiment and alternative embodiments, which are not described herein again in this embodiment.

An embodiment of the present disclosure further provides a computer-readable storage medium storing computer-executable instructions. When the computer-executable instructions are executed, the foregoing service forwarding method is implemented.

Those skilled in the art could understand that the above-mentioned modules or steps of the embodiments of the present disclosure can be implemented by using general-purpose computing devices, which can be concentrated on a single computing device or distributed on a network of multiple computing devices. Alternatively, they may be implemented with program codes that are executable by the computing device so that they may be stored in the storage device by the computing device and, in some cases, may be performed in a different order than that. The steps shown or described may be implemented as separate integrated circuit modules, or as a single integrated circuit module.

Those of ordinary skill in the art could understand that all or part of the steps of the above embodiments can be implemented by using a computer program process and the computer program can be stored in a computer-readable storage medium on a corresponding hardware platform (e.g., system, device, apparatus, component, processor, etc.), and when executed, includes one or a combination of the steps of the method embodiments.

Alternatively, all or part of the steps of the above embodiments may also be implemented using an integrated circuit, and these steps may be separately formed into individual integrated circuit modules, or multiple of them may be formed into a single integrated circuit module.

The apparatus/functional modules/functional units in the above embodiments may be implemented using general-purpose computing devices, which may be centralized on a single computing device or may be distributed on a network composed of a plurality of computing devices.

When the device/function module/function unit in the above embodiment is implemented as a software function module and sold or used as an independent product, it may be stored in a computer-readable storage medium. The above-mentioned computer-readable storage medium may be a read-only memory, a magnetic disk or an optical disk, and the like.

Persons of ordinary skill in the art could understand that the technical solutions of the present application may be modified or equivalently replaced without departing from the spirit and scope of the technical solutions of the present application. The scope of protection of the present application is defined by the scope of the claims.

### Industrial applicability

In this embodiment of the present disclosure, after receiving the request message sent by the onboard unit OBU for indicating forwarding V2X service, the eNB, in response to the request message, may send to the OBU a forwarding strategy for indicating forwarding the designated V2X service through the Uu interface; or the eNB sends to the OBU a forwarding strategy for indicating forwarding the designated V2X service through an Uu interface. Through the forwarding strategy, the eNB receives the designated V2X service sent by the OBU according to the forwarding strategy and determines the target forwarding area for the V2X service and forwards the designated V2X service to the target forwarding area. That is, in this embodiment, the eNB sends a forwarding policy for forwarding the V2X service according to the OBU request or proactively through the Uu interface, so that the OBU can forward the V2X service according to the forwarding policy. Then, the eNB forwards the V2X service. Thus, it can solve the problem that it is difficult to forward a V2X service through the Uu interface in the related art.

## Claims

1. A service forwarding method, comprising:
receiving, by a base station eNB, a request message sent by an onboard unit OBU for indicating forwarding a Vehicle to Everything V2X service;
sending, by the eNB, to the OBU a forwarding strategy for indicating forwarding the designated V2X service through an Uu interface between a user equipment UE and an eNB in response to the request message; or sending, by the eNB, to the OBU a forwarding strategy for indicating forwarding the designated V2X service through an Uu interface;
receiving, by the eNB, the designated V2X service sent by the OBU according to the forwarding strategy, and determining a target forwarding area for the V2X service; and
forwarding, by the eNB, the designated V2X service to the target forwarding area.

2. The method according to claim 1, wherein the request message comprises at least one of: a data size of the V2X service, a time period for forwarding the V2X service, a probability of forwarding the V2X service, and a frequency or a period for sending the V2X service, an identifier of the OBU for forwarding the V2X service, a priority level of the V2X service, and a reason for the OBU to forward the V2X service.

3. The method according to claim 1, wherein the target forwarding area comprises: the cell in which the OBU is located, or the cell in which the OBU is located and the neighboring cell.

4. The method according to claim 1, wherein the eNB determining a mode for forwarding the designated V2X service by:
selecting, by the eNB, a forwarding mode according to a V2X service attribute and a local strategy, wherein the forwarding mode comprises at least one of: single Cell-Point to Multi-point SC-PTM, System Information Block SIB, a paging message, Multicast Broadcast Single Frequency Network MBSFN, Public Warning System PWS, and Unicast.

5. The method according to claim 1, wherein sending, by the eNB, to the OBU a forwarding strategy for indicating forwarding the designated V2X service through an Uu interface in response to the request message, comprising:
determining, by the eNB, a factor of the forwarding strategy, wherein the factor comprises at least one of: a V2X service attribute, an operator strategy, a Uu interface load, and a local load of the eNB; and
determining, by the eNB, the forwarding strategy for indicating forwarding the designated V2X service through the Uu interface according to the factor, wherein the forwarding strategy carries a type of the designated V2X service.

6. The method according to claim 5, wherein the type of the V2X service comprises at least one of: a periodic V2X service, an event-triggered V2X service, and a basic security message.

7. The method according to claim 1, wherein before the eNB receives the designated V2X service sent by the OBU according to the forwarding strategy, the method further comprises:
configuring, by the eNB resources to upload a V2X service through the Uu interface.

8. A service forwarding method comprising:
sending, by an onboard unit OBU, to a base station eNB a request message for indicating forwarding a Vehicle to Everything V2X service;
receiving, by the OBU, a forwarding strategy sent by the eNB for indicating forwarding the designated V2X service through the Uu interface between a user equipment UE and an eNB; and
sending, bythe OBU, the designated V2X service to the eNB according to the forwarding strategy, so that the eNB can forward the designated V2X service to a target forwarding area.

9. The method according to claim 8, wherein the request message comprises at least one of: a data size of the V2X service, a time period for forwarding the V2X service, a probability of forwarding the V2X service, and a frequency or a period for sending the V2X service, an identifier of the OBU for forwarding the V2X service, a priority level of the V2X service, and a reason for the OBU to forward the V2X service.

10. A service forwarding apparatus, applied to a base station eNB side, comprising:
a first receiving module configured to receive a request message sent by an onboard unit OBU for indicating forwarding a Vehicle to Everything V2X service; a first sending module configured to send to the OBU a forwarding strategy for indicating forwarding the designated V2X service through an Uu interface between a user equipment UE and an eNB in response to the request message; and/or a second sending module configured to send to the OBU a forwarding strategy for indicating forwarding the designated V2X service through an Uu interface;
a processing module configured to receive the designated V2X service sent by the OBU according to the forwarding strategy, and determine a target forwarding area for the V2X service; and
a first forwarding module configured to forward the designated V2X service to the target forwarding area.

11. The apparatus according to claim 10, wherein the request message comprises at least one of: a data size of the V2X service, a time period for forwarding the V2X service, a probability of forwarding the V2X service, and a frequency or a period for sending the V2X service, an identifier of the OBU for forwarding the V2X service, a priority level of the V2X service, and a reason for the OBU to forward the V2X service.

12. The apparatus according to claim 10, wherein the target forwarding area comprises: the cell in which the OBU is located, or the cell in which the OBU is located and the neighboring cell.

13. The apparatus according to claim 10, wherein a mode for forwarding the designated V2X service is determined by:
selecting a forwarding mode according to a V2X service attribute and a local strategy, wherein the forwarding mode comprises at least one of: single Cell-Point to Multi-point SC-PTM, System Information Block SIB, a paging message, Multicast Broadcast Single Frequency Network MBSFN, Public Warning System PWS, and Unicast.

14. The apparatus according to claim 10, wherein the first sending module comprises:
an obtaining unit configured to determine a factor of the forwarding strategy, wherein the factor comprises at least one of: a V2X service attribute, an operator strategy, a Uu interface load, and a local load of the eNB; and
a sending unit configured to determine the forwarding strategy for indicating forwarding the designated V2X service through the Uu interface according to the factor, wherein the forwarding strategy carries a type of the designated V2X service.

15. The apparatus according to claim 14, wherein the type of the V2X service comprises at least one of: a periodic V2X service, an event-triggered V2X service, and a basic security message.

16. The apparatus according to claim 10, wherein before the eNB receives the designated V2X service sent by the OBU according to the forwarding strategy, the apparatus further comprises:
a configuring module configured to configure resources to upload a V2X service through the Uu interface.

17. A service forwarding apparatus, applied to an onboard unit OBU side, comprising:
a third sending module configured to send to a base station eNB a request message for indicating forwarding a Vehicle to Everything V2X service;
a second receiving module configured to receive a forwarding strategy sent by the eNB for indicating forwarding the designated V2X service through the Uu interface between a user equipment UE and an eNB; and
a second forwarding module configured to send the designated V2X service to the eNB according to the forwarding strategy, so that the eNB can forward the designated V2X service to a target forwarding area.

18. The apparatus according to claim 17, wherein the request message comprises at least one of: a data size of the V2X service, a time period for forwarding the V2X service, a probability of forwarding the V2X service, and a frequency or a period for sending the V2X service, an identifier of the OBU for forwarding the V2X service, a priority level of the V2X service, and a reason for the OBU to forward the V2X service.
